# EUROPÄISCHE PATENTSCHRIFT

(11) **EP 3 174 777 B1**
(45) Veröffentlichungstag und Bekanntmachung des Hinweises auf die Patenterteilung: **27.03.2019**
(21) Anmeldenummer: 15738299.5
(22) Anmeldetag: 09.07.2015
(51) Int. Cl.: B62D 27/06, B62D 29/00

(54) **VERBINDUNGSANORDNUNG ZWISCHEN EINEM FASERKUNSTSTOFFVERBUND-PROFILTEIL UND EINEM KAROSSERIERAHMENTEIL UND VERFAHREN ZU DEREN HERSTELLUNG**
CONNECTION ARRANGEMENT BETWEEN A FIBRE-PLASTIC COMPOSITE PROFILED PART AND A VEHICLE BODY FRAME PART AND METHOD FOR PRODUCING SAME
DISPOSITIF D'ASSEMBLAGE ENTRE UNE PARTIE PROFILÉE EN COMPOSITE SYNTHÉTIQUE FIBREUX ET UNE PARTIE DE CADRE DE CARROSSERIE, ET SON PROCÉDÉ DE FABRICATION

(30) Priorität: 29.07.2014 DE 102014214846
(43) Veröffentlichungstag der Anmeldung: 07.06.2017
(73) Patentinhaber: Bayerische Motoren Werke Aktiengesellschaft, 80809 München (DE)
(72) Erfinder: FORSTER, Andreas, 92526 Oberviechtach (DE); WAGNER, Julia, 85748 Garching (DE); WILHELM, Maximilian, 87439 Kempten (DE)
(86) Internationale Anmeldenummer: PCT/EP2015/065654
(87) Internationale Veröffentlichungsnummer: WO 2016/015970

(56) Entgegenhaltungen:
- EP-A1- 1 454 820
- DE-A1-102012 016 666
- DE-A1-102013 010 332
- DE-C1- 4 423 642

## Beschreibung

Die Erfindung betrifft eine Verbindungsanordnung zwischen einem Faserkunststoffverbund-Profilteil und einem Karosserierahmenteil nach dem Oberbegriff des Patentanspruchs 1.

Die Erfindung betrifft ferner ein Verfahren zur Herstellung einer solchen Verbindungsanordnung und eine bevorzugte Verwendung im Kraftfahrzeugbau.

Im Kraftfahrzeugbau und insbesondere im Karosseriebau werden zunehmend Leichtbauwerkstoffe eingesetzt. Hierzu gehören auch Faserkunststoffverbunde, wie bspw. CFK und GFK. Neben flächigen Bauteilen kommen verstärkt auch aus einem Faserkunststoffverbund (FKV) gebildete Profilbauteile (nachfolgend als Faserkunststoffverbund-Profilteile bezeichnet) zum Einsatz. Aus dem Stand der Technik sind diverse Verbindungsanordnungen zur Einbindung bzw. Anbindung eines Faserkunststoffverbund-Profilteils an eine bzw. in eine Karosserierahmenstruktur bekannt.

In der DE 10 2012 016 666 A1 ist ein Knotelement gezeigt und beschrieben, das mit zapfenförmigen Enden (Laschen) ausgebildet ist, auf die aus faserverstärktem Kunststoff gebildete Hohlprofile aufgesteckt und durch Verkleben, Verschweißen, Verlöten oder Verstemmen fixiert sind. Dies ist der nächstliegende Stand der Technik.

In der DE 10 2013 010 332 A1 ist ein Sandwichbauteil mit einem Verstärkungsprofil beschrieben. Das Verstärkungsprofil ist in das Sandwich eingeklebt und mit mechanischen Verbindungsmitteln oder Fügeelementen (z. B. Schrauben, Bolzen, Nieten, Nägel oder Stifte) an die FVK-Deckschichten angebunden.

Zum Stand der Technik wird auf die Patentschriften DE 44 23 642 C1,
EP 1 454 820 A1, DE 10 2013 002 365 B3, DE 10 2012 112 313 A1 und die DE 10 2010 053 843 A1 hingewiesen.

Der Erfindung liegt die Aufgabe zugrunde, eine Verbindungsanordnung betreffender Art anzugeben, die wenigstens einen mit dem Stand der Technik einhergehenden Nachteil nicht oder zumindest nur in einem verminderten Umfang aufweist.

Diese Aufgabe wird gelöst durch eine erfindungsgemäße Verbindungsanordnung entsprechend den Merkmalen des Patentanspruchs 1. Mit einem nebengeordneten Patentanspruch erstreckt sich die Erfindung auch auf ein erfindungsgemäßes Verfahren zur Herstellung einer erfindungsgemäßen Verbindungsanordnung. Mit einem weiteren nebengeordneten Patentanspruch erstreckt sich die Erfindung ferner auf eine bevorzugte Verwendung einer erfindungsgemäßen Verbindungsanordnung. Vorteilhafte Weiterbildungen und Ausgestaltungen der Erfindung ergeben sich analog für alle Erfindungsgegenstände sowohl aus den abhängigen Patentansprüchen als auch aus den nachfolgenden Erläuterungen.

Eine erfindungsgemäße Verbindungsanordnung zwischen einem Faserkunststoffverbund-Profilteil und einem Karosserierahmenteil umfasst ein mit dem Karosserierahmenteil verbundenes Verbindungsmittel in Gestalt eines Zwischenstücks, das einen Verbindungsabschnitt aufweist, der mit einem Ende des als rohrartiges Hohlprofil ausgebildeten Faserkunststoffverbund-Profilteils steckverbunden und verklebt ist, wobei das Ende des Faserkunststoffverbund-Profilteils auf den Verbindungsabschnitt des Zwischenstücks aufgesteckt und innenflächig, d. h. an seiner Innenumfangsfläche, mit diesem Verbindungsabschnitt verklebt ist.

Das Faserkunststoffverbund-Profilteil und das Karosserierahmenteil gehören insbesondere auch zu der erfindungsgemäßen Verbindungsanordnung. Insofern könnte eine erfindungsgemäße Verbindungsanordnung auch als Bauteilverbund bezeichnet werden.

Anders als bei den aus dem Stand der Technik bekannten Verbindungsanordnungen ist das Zwischenstück, das auch als Anbindungsstück oder Adapter bezeichnet werden kann, mit seinem Verbindungsabschnitt bzw. Steckverbindungsabschnitt nicht auf das Ende des Faserkunststoffverbund-Profilteils aufgesteckt, sondern eingesteckt, wozu das Zwischenstück bzw. dessen Verbindungsabschnitt entsprechend ausgebildet ist. Die Verklebung besteht zwischen den in einem Überlappungsbereich flächenbündig aneinander anliegenden Flächenabschnitten auf der Außenseite bzw. Außenumfangsfläche des eingesteckten Verbindungsabschnitts und der Innenseite bzw. Innenumfangsfläche am offenen Ende des aufgesteckten Faserkunststoffverbund-Profilteils. Diese Flächenabschnitte können auch als Klebeflächen bezeichnet werden. Die unmittelbare Verklebung zwischen den Fügepartnern ist dadurch sehr gut vor äußeren Einwirkungen geschützt. Zudem ergibt sich eine sehr ansprechende Anmutungsoptik. Ferner ergeben sich Vorteile beim Klebefügen, wie nachfolgend noch näher erläutert.

Das Zwischenstück ist bevorzugt aus einem metallischen Material, vorzugsweise aus einem Aluminium- oder Stahlwerkstoff, gebildet. Bei dem Zwischenstück kann es sich um ein Schmiedeteil, Blechformteil oder Gussteil, insbesondere Druckgussteil, handeln. Ebenso kann es sich bei dem Zwischenstück auch um ein, insbesondere aus Aluminium- oder Stahlwerkstoff gebildetes, Profilteil handeln. Bevorzugt handelt es sich um ein abgelängtes Strangguss- oder Strangpressprofilteil, das bspw. als offenes Profil (z. B. als U-Profil) oder als geschlossenes Hohlprofil bzw. Rohrprofil ausgebildet sein kann. Bevorzugt ist das Zwischenstück einstückig (d. h. in einem Stück) hergestellt, wobei auch eine mehrstückige Ausgestaltung (bspw. als Schweißteil) möglich ist.

Bei dem Karosserierahmenteil handelt es sich insbesondere um ein Blechformteil, Gussteil, (metallisches) Profilteil oder dergleichen, das insbesondere aus einem Aluminium- oder Stahlwerkstoff gebildet ist. Bevorzugt handelt es sich bei dem Karosserierahmenteil um ein warmumgeformtes und insbesondere pressgehärtetes Blechformteil, das demgemäß eine hohe Materialfestigkeit aufweist. Das Karosserierahmenteil ist bevorzugt Bestandteil einer Kraftfahrzeugkarosserie und ist dementsprechend in eine übergeordnete Karosseriestruktur bzw. Karosserierahmenstruktur eingebunden. Das Zwischenstück kann mit dem Karosserierahmenteil bspw. durch Verschweißen, Verschrauben, Vernieten oder dergleichen stoffschlüssig und/oder formschlüssig gefügt sein, wozu das Zwischenstück bevorzugt mit einem geeigneten Verbindungsabschnitt, bspw. in Gestalt eines Schweiß-, Schraub- oder Nietflanschs, ausgebildet ist. Ebenso ist eine einstückige Ausbildung des Zwischenstücks mit dem Karosserierahmenteil möglich, bspw. derart, dass das Zwischenstück durch Umformen oder Urformen direkt am Karosserierahmenteil angeformt ist.

Das Faserkunststoffverbund-Profilteil ist als rohrartiges Hohlprofil (bzw. als so genanntes Vollprofil) ausgebildet. Das Faserkunststoffverbund-Profilteil kann eine räumliche Formgebung aufweisen und bspw. entlang seines axialen Längsverlaufs gekrümmt oder anderswie geformt sein. Bevorzugt ist das Faserkunststoffverbund-Profilteil entlang seines axialen Längsverlaufs mit konstanten bzw. gleichbleibenden Querschnitten ausgebildet.

Erfindungsgemäß ist vorgesehen, dass der Außenquerschnitt des Verbindungsabschnitts des Zwischenstücks nicht vollumfänglich mit dem Innenquerschnitt des als Hohlprofil ausgebildeten Faserkunststoffverbund-Profilteils korrespondiert, wodurch außerhalb der im Überlappungsbereich flächenbündig aneinander anliegenden und zumindest teilweise auch miteinander verklebten Flächenabschnitte (auf der Außenumfangsfläche des eingesteckten Verbindungsabschnitts und auf der Innenumfangsfläche am Ende des aufgesteckten Faserkunststoffverbund-Profilteils) Freilaufzonen bzw. Freiräume vorhanden sind, die quer zur Längs- bzw. Aufsteckrichtung unterschiedliche Wärmeausdehnungen des Zwischenstücks bzw. dessen Verbindungsabschnitts und des Faserkunststoffverbund-Profilteils ermöglichen.

Der Verbindungsabschnitt des Zwischenstücks kann mit wenigstens einer Einsteckschräge bzw. Einführschräge ausgebildet sein, die ein einfaches und beschädigungsfreies Einstecken in das offene Ende des Faserkunststoffverbund-Profilteils bzw. Aufstecken des Faserkunststoffverbund-Profilteils auf den Verbindungsabschnitt des Zwischenstücks ermöglicht. Eine Einsteckschräge kann bspw. durch Anspitzung oder Anfasung des Verbindungsabschnitts am Zwischenstück gebildet sein.

Die Erfindung sieht ferner vor, dass das aufgesteckte Faserkunststoffverbund-Profilteil mit wenigstens einer fließlochformenden Schraube am Verbindungsabschnitt des Zwischenstücks fixiert bzw. festgeschraubt ist. Die Verbindung zwischen dem Faserkunststoffverbund-Profilteil und dem Zwischenstück erfolgt also durch Verklebung und durch Verschraubung an dem auf das Zwischenstück aufgesteckten Ende mittels wenigstens einer im Überlappungsbereich eingeschraubten fließlochformenden Schraube bzw. Fließlochschraube.

Die verwendete fließlochformende Schraube weist bevorzugt einen Schraubenkopf und einen Schraubenschaft auf, wobei der Schraubenschaft mit einem selbstformenden Gewindeabschnitt und einem davor angeordneten Fließlochformungsabschnitt ausgebildet ist. Derartige fließlochformende Schrauben sind aus dem Stand der Technik bekannt (siehe bspw. DE 39 09 725 C1), werden bislang jedoch nicht für den genannten Zweck verwendet. Diese Weiterbildung der Erfindung erstreckt sich somit auch auf die neue Verwendung wenigstens einer fließlochformenden Schraube für eine entsprechende Verbindungsanordnung und/oder zur Herstellung einer entsprechenden Verbindungsanordnung.

In vorteilhafter Weise ermöglicht die Verwendung einer fließlochformenden Schraube ein spanloses Direktfügen ohne Vorlochen oder sonstiges Vorbereiten des Zwischenstücks und insbesondere auch ohne Vorlochen des Faserkunststoffverbund-Profilteils, wodurch beim Herstellen einer erfindungsgemäßen Verbindungsanordnung, insbesondere im Vergleich zu anderen mechanischen Fügemitteln und -verfahren (wie bspw. das Nieten oder das konventionelle Verschrauben) Aufwände reduziert und Taktzeiten verringert werden. Vor allem in der Serienfertigung sind somit erhebliche Kostenvorteile erzielbar. Eine mit einer fließlochformenden Schraube hergestellte Füge- bzw. Schraubverbindung ist zudem sehr belastbar und wieder lösbar (bspw. zur Durchführung von Reparaturen). Zudem ist das Einschrauben einer fließlochformenden Schraube sehr gut automatisierbar. Ferner ergeben sich auch Vorteile im Hinblick auf die Korrosionsneigung. Dies ist keine abschließende Aufzählung von Vorteilen, die mit der Verwendung bzw. dem Einsatz fließlochformender Schrauben einhergehen.

Das erfindungsgemäße Verfahren zur Herstellung einer erfindungsgemäßen Verbindungsanordnung umfasst zumindest die folgenden Schritte:
- Bereitstellen eines als rohrartiges Hohlprofil ausgebildeten Faserkunststoffverbund-Profilteils und eines insbesondere aus Metall gebildeten und einen Verbindungsabschnitt aufweisenden Zwischenstücks, wobei das Faserkunststoffverbund-Profilteil und das Zwischenstück den vorausgehenden und/oder nachfolgenden Erläuterungen entsprechend ausgebildet sein können und wobei insbesondere vorgesehen ist, dass das Zwischenstück bereits mit einem Karosserierahmenteil verbunden ist;
- Auftragen eines Klebstoffs (wobei es sich insbesondere um einen so genannten Strukturklebstoff handelt) auf die betreffenden Flächenabschnitte (d.h. auf die in einem herzustellenden Überlappungsbereich korrespondierenden Klebeflächen) an der Außenumfangsfläche des Verbindungsabschnitts des Zwischenstücks und/oder an der Innenumfangsfläche am offenen Ende des Faserkunststoffverbund-Profilteils;
- gegebenenfalls Anhärten oder Angelieren des Klebstoffs;
- Steckverbinden des Zwischenstücks mit dem Faserkunststoffverbund-Profilteil durch Einstecken des Verbindungsabschnitts in das offene Ende des Faserkunststoffverbund-Profilteils bzw. durch Aufstecken des Faserkunststoffverbund-Profilteils auf den Verbindungsabschnitt des Zwischenstücks, wobei nach dem Einstecken bzw. Aufstecken ein großer Toleranzausgleich in Aufsteckrichtung bzw. Längsrichtung des Profilteils ermöglicht ist; und
- Ausführen einer Wärmebehandlung zum Aushärten des Klebstoffs, wobei die im Überlappungsbereich flächenbündig aneinander anliegenden und mit Klebstoff versehenen Flächenabschnitte bzw. Klebeflächen aufgrund der größeren Wärmeausdehnung des insbesondere aus Metall gebildeten Zwischenstücks aneinander gepresst werden.

Das erfindungsgemäße Verfahren macht sich demnach den an und für sich nachteiligen Umstand zu Nutze, dass das Metallmaterial des Zwischenstücks beim Erwärmen eine höhere bzw. stärker ausgeprägte Wärmeausdehnung als das Faserkunststoffverbund-Material des Profilteils aufweist. Indem das Ende des Faserkunststoffverbund-Profilteils auf den Verbindungsabschnitt des metallischen Zwischenstücks aufgesteckt ist, wird das Zwischenstück im Überlappungsbereich beim Erwärmen an den Klebeflächen bzw. Anlageflächen quasi von innen gegen die Innenumfangsfläche des Faserkunststoffverbund-Profilteils gepresst, wodurch eine besonders innige und feste Klebverbindung entsteht. Als besonders vorteilig erweisen sich hierbei auch die oben erläuterten Freilaufzonen, wodurch kritische Materialspannungen bei der Wärmebehandlung verhindert werden können.

Die Wärmebehandlung kann bspw. mittels Ofen oder einer induktiven Erwärmungsanlage durchgeführt werden. Bevorzugt erfolgen die Wärmebehandlung und das Aushärten des Klebstoffs bei einem Trocknungsdurchlauf im Anschluss an ein kathodisches Tauchlackieren, also im Rahmen eines KTL-Prozesses.

Erfindungsgemäß ist vorgesehen, dass das Faserkunststoffverbund-Profilteil nach dem Steckverbinden und vor der Wärmebehandlung mit wenigstens einer fließlochformenden Schraube am Zwischenstück festgeschraubt wird, wobei das Festschrauben ohne Vorlochen des Zwischenstücks und insbesondere auch ohne Vorlochen des Faserkunststoffverbund-Profilteils erfolgt (so genanntes Direktverschrauben), wozu insbesondere auch auf die diesbezüglichen obenstehenden Erläuterungen verwiesen wird. Das Setzen bzw. Einschrauben der fließlochformenden Schraube erfolgt bevorzugt automatisiert. Das Setzen wenigstens einer fließlochformenden Schraube dient insbesondere auch der temporären Fixierung der Fügepartner bis zur Aushärtung des Klebestoffs.

Bevorzugt wird eine erfindungsgemäße Verbindungsanordnung an einer Kraftfahrzeugkarosserie zur Anbindung eines aus einem Faserkunststoffverbund-Profilteil, das als rohrartiges Hohlprofil ausgebildet ist, gebildeten Dachspriegels an einen Dachrahmen verwendet. Das den Dachspriegel bildende Faserkunststoffverbund-Profilteil kann entsprechen den vorausgehenden und/oder nachfolgenden Erläuterungen ausgebildet sein. Das zur Verbindungsanordnung gehörende Zwischenstück kann mit dem Dachrahmen verschweißt, verschraubt, vernietet oder in sonstiger geeigneter Weise verbunden sein. Besonders bevorzugt ist vorgesehen, dass das Zwischenstück einstückig mit einem den Dachrahmen bildenden bzw. zum Dachrahmen gehörenden Karosserierahmenteil (bspw. ein Dachlängsträger oder dergleichen) ausgebildet ist. Bei dem Karosserierahmenteil handelt es sich bevorzugt um ein warmumgeformtes und insbesondere pressgehärtetes Blechformteil.

Die Erfindung erstreckt sich somit, zumindest indirekt, auch auf eine Kraftfahrzeugkarosserie und/oder eine Karosserierahmenstruktur mit wenigstens einem als Faserkunststoffverbund-Profilteil ausgebildeten Dachspriegel, der zumindest einseitig und insbesondere beidseitig, d. h. an seinen beiden axialen Enden, mittels erfindungsgemäßer Verbindungsanordnung an einem Dachrahmen oder dergleichen befestigt ist.

Die Erfindung wird nachfolgend anhand der schematischen und nicht maßstabsgerechten Figuren beispielhaft näher erläutert. Die in den Figuren gezeigten und/oder nachfolgend erläuterten Merkmale können, auch losgelöst von konkreten Merkmalskombinationen, zugleich allgemeine Merkmale der Erfindung sein.
- Fig. 1: zeigt ausschnittsweise in einer perspektivischen Ansicht einen aus einem Faserkunststoffverbund-Profil gebildeten Dachspriegel, der mittels einer erfindungsgemäßen Verbindungsanordnung an einen Dachrahmen der Fahrzeugkarosserie angebunden ist.
- Fig. 2: zeigt in einer Schnittansicht die Verbindungsanordnung aus Fig. 1.
- Fig. 3: zeigt dieselbe Verbindungsanordnung in einer anderen Schnittansicht.
- Fig. 4: zeigt in Schnittansichten entsprechend Fig. 3 zwei weitere Ausführungsmöglichkeiten erfindungsgemäßer Verbindungsanordnungen.

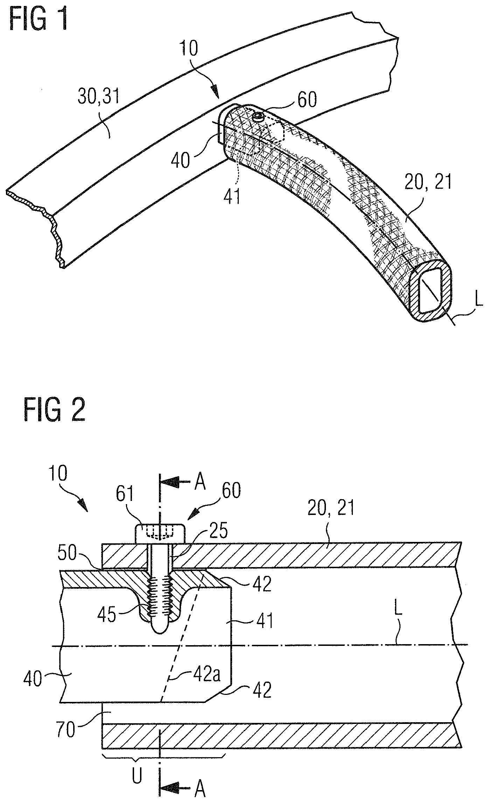

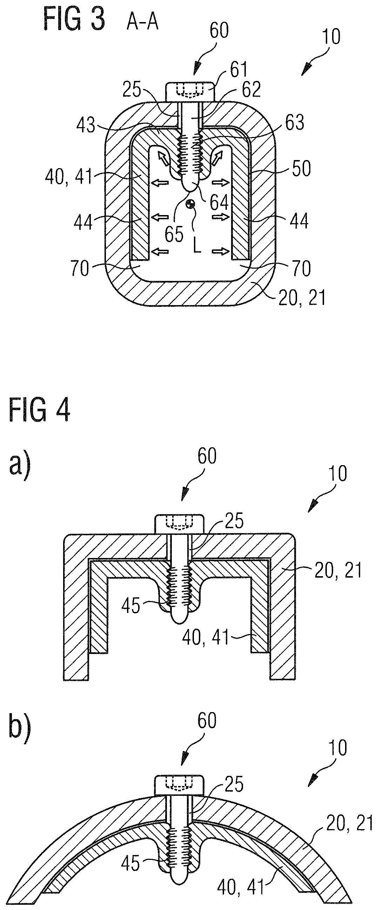

Fig. 1 zeigt eine Verbindungsanordnung 10 zwischen einem räumlich geformten Dachspriegel 20 und einem räumlich geformten Dachrahmen 30 an einer im Weiteren nicht dargestellten Fahrzeugkarosserie. Der Dachspriegel 20 ist als rohrartiges Faserkunststoffverbund-Hohlprofilteil 21 ausgebildet. Der geschlossene, näherungsweise rechteckige Querschnitt des Faserkunststoffverbund-Profilteils 21 ist nur beispielhaft. Das Faserkunststoffverbund-Profilteil 21 könnte bspw. auch einen geschlossenen kreisförmigen oder ovalen Querschnitt aufweisen oder mit einem offenen Querschnitt (wie bspw. in Fig. 4 gezeigt) ausgebildet sein. Bei dem den Dachrahmen 30 bildenden Karosserierahmenteil 31 handelt es sich um ein warmumgeformtes und insbesondere pressgehärtetes Stahlblechformteil. An seinem anderen Ende kann der Dachspriegel 20 in gleicher Weise mittels einer solchen Verbindungsanordnung 10 an einem Dachrahmen 30 bzw. Karosserierahmenteil 31 angebunden sein.

Die Verbindungsanordnung 10 umfasst ein metallisches Zwischenstück 40. Das Zwischenstück 40 weist einen Verbindungsabschnitt 41 auf, der in das offene Ende des Faserkunststoffverbund-Profilteils 21 eingesteckt ist bzw. auf den das Faserkunststoffverbund-Profilteil 21 mit seinem offenen Ende aufgesteckt ist, wie in Fig. 2 gezeigt. Im Überlappungsbereich U ist das Faserkunststoffverbund-Profilteil 21 innenflächig mit seinen flächenbündig am Steckverbindungsabschnitt 41 anliegenden Flächenabschnitten mit dem Zwischenstück 40 verklebt. Die flächige Verklebung erfolgt insbesondere mittels Strukturklebstoff 50, der sich zwischen den korrespondierenden Klebeflächen befindet.

Das Zwischenstück 40 ist als Profilteil ausgebildet, wobei es sich um ein offenes U-Profil handelt, wie in Fig. 3 erkennbar. Durch die Verwendung eines offenen Profils kann Gewicht eingespart werden. An seinem vom Verbindungsabschnitt 41 abgewandten Ende ist das Zwischenstück 40 mit dem Dachrahmen 30 bzw. dem Karosserierahmenteil 31 verbunden, wozu das Zwischenstück 40 einen in Fig. 2 nicht gezeigten Verbindungsflansch aufweisen kann. Ebenso ist auch eine einstückige Ausbildung des Karosserierahmenteils 31 mit wenigstens einem, insbesondere angeformten, Zwischenstück 40 möglich, wie obenstehend erläutert. Wie ferner aus Fig. 2 ersichtlich, ist der Verbindungsabschnitt 41 des Zwischenstücks 40 mit Einsteckschrägen 42 ausgebildet. Die strichlinierte Linie 42a zeigt eine andere Möglichkeit zur Ausgestaltung einer Einsteckschräge.

Im Überlappungsbereich U ist das Faserkunststoffverbund-Profilteil 21 ferner mit einer fließlochformenden Schraube 60 am eingesteckten Verbindungsabschnitt 41 des Zwischenstücks 40 befestigt, d. h. festgeschraubt bzw. angeschraubt. Die verwendete fließlochformende Schraube 60 weist einen Schraubenkopf 61 und einen Schraubenschaft 62 auf, wobei der Schraubenschaft 62 mit einem selbstformenden Gewindeabschnitt 63 und einem davor angeordneten Fließlochformungsabschnitt 64, einschließlich einer stumpfen Schraubenspitze 65, ausgebildet ist.

Die fließlochformende Schraube 60 kann direkt, d. h. ohne ein vorheriges Lochen oder sonstiges Vorbereiten des Zwischenstücks 40, gesetzt werden. Das Faserkunststoffverbund-Profilteil 21 weist an der Einschraubstelle ein Vorloch 25 auf, wobei hierauf eventuell auch verzichtet werden kann. So oder so bestehen in vorteilhafter Weise keine durch erforderliche Lochüberdeckungen vorgegebene Relativpositionen zwischen dem Zwischenstück 40 und dem aufgesteckten Faserkunststoffverbund-Profilteil 21.

Die fließlochformende Schraube 60 wird an der vorgesehenen Einschraubstelle durch das Vorloch 25 hindurch gegen das Zwischenstück 40 bzw. den Mittelsteg 43 des Verbindungsabschnitts 41 gedrückt und in Drehung versetzt. Infolge der entstehenden Reibung wird die Einschraubstelle lokal erwärmt, was eine Plastifizierung des Metallmaterials ermöglicht, das hieraufhin in radialer Richtung und in axialer Richtung mit dem Fließlochformungsabschnitt 64 plastisch verformt und schließlich durchdrungen wird. Hierbei wird am Zwischenstück 40 ein nach innen weisendes Fließloch 45 ausgeformt, in das nachfolgend der selbstformende Gewindeabschnitt 63 der Schraube 60 eingreift, wodurch eine lösbare, kraft- und formschlüssige Verbindung zwischen den Bauteilen bzw. Fügepartnern 20 und 40 hergestellt wird. In vorteilhafter Weise erfolgt der Setz- bzw. Einschraubvorgang spanlos. Ferner genügt an der Einschraubstelle eine einseitige Werkzeugzugänglichkeit. Beim Setzen der Schraube 60 ist das Zwischenstück 40 typischerweise bereits am Karosserierahmenteil 31 befestigt.

In analoger Weise kann die Schraubbefestigung des Faserkunststoffverbund-Profilteils 21 am Verbindungsabschnitt 41 des Zwischenstücks 40 auch mit mehreren fließlochformenden Schrauben 60 erfolgen, die (bezüglich der Längsachse L) nebeneinander oder hintereinander angeordnet in den Mittelsteg 43 des Verbindungsabschnitts 41 eingeschraubt sein können. Gemäß Darstellung in Fig. 3 können die Schrauben 60 auch aus seitlicher Richtung durch die Schenkel 44 des als U-Profil ausgebildeten Verbindungsabschnitts 41 eingeschraubt sein.

Wie sehr gut aus der Schnittdarstellung in Fig. 3 ersichtlich, korrespondiert der Außenquerschnitt des als U-Profil ausgebildeten Verbindungsabschnitts 41 des Zwischenstücks 40 nicht vollständig bzw. vollumfänglich mit dem Innenquerschnitt des Faserkunststoffverbund-Profilteils 21, wodurch außerhalb der im Überlappungsbereich U flächenbündig aneinander anliegenden Flächenabschnitte Freilaufzonen bzw. Freiräume 70 vorhanden sind, die im Querschnitt, d. h. quer zur Längsachse L (und somit quer zur Aufsteck- bzw. Einsteckrichtung), unterschiedliche Wärmeausdehnungen ermöglichen. Gemäß Darstellung in Fig. 3 können sich die Schenkel 44 des Zwischenstücks 40 bei Erwärmung nach unten in die Freilaufzonen 70 hinein ausdehnen, wodurch insbesondere dem Umstand Rechnung getragen wird, dass das metallische Zwischenstück 40 eine größere Wärmeausdehnung als das Faserkunststoffverbund-Profilteil 21 aufweist. Die unterschiedlichen Wärmeausdehnungen werden von der in den Mittelsteg 43 eingeschraubten Schraube 60 nicht behindert.

Zum Herstellen der Verbindungsanordnung 10 wird zunächst der Klebstoff 50 auf die betreffenden Flächenabschnitte an der Außenumfangsfläche des Verbindungsabschnitts 41 des Zwischenstücks 40 und/oder an der Innenumfangsfläche am offenen Ende des Faserkunststoffverbund-Profilteils 21 aufgetragen, wobei insbesondere vorgesehen ist, dass das Zwischenstück 40 bereits mit dem Karosserierahmenteil 31 verbunden ist. Danach werden das Faserkunststoffverbund-Profilteil 21 und das Zwischenstück 40 steckverbunden. Nach dem Einschrauben wenigstens einer fließlochformenden Schraube 60 wird der hierdurch vorfixierte Bauteilverbund zur Aushärtung des Klebstoffs 50 einer Wärmebehandlung unterzogen, was insbesondere im Zuge eines KTL-Trocknungsdurchlaufs erfolgt. Hierbei werden die im Überlappungsbereich U flächenbündig aneinander anliegenden und mit Klebstoff 50 versehenen Flächenabschnitte bzw. Klebeflächen aufgrund der größeren Wärmeausdehnung des metallischen Zwischenstücks 40 gegeneinander gepresst, wie in Fig. 3 durch die Pfeile veranschaulicht. Zudem ermöglichen die Freilaufzonen 70 unterschiedliche Wärmeausdehnungen, wodurch kritische Materialspannungen verhindert werden können. Im Weiteren wird auf die obenstehenden ausführlichen Erläuterungen verwiesen.

Fig. 4 zeigt zwei andere Ausführungsmöglichkeiten erfindungsgemäßer Verbindungsanordnungen 10, bei denen die Dachspriegel 20 als offene Faserkunststoffverbund-Profilteile ausgebildet sind. Die dargestellten Größen- und Geometrieverhältnisse sind, wie auch bei der in den Fig. 1 bis 3 gezeigten Ausführungsmöglichkeit, nur beispielhaft. Im Übrigen gelten sinngemäß die vorausgehenden Erläuterungen zu der in den Fig. 1 bis 3 gezeigten Ausführungsmöglichkeit.

## Patentansprüche

1. Verbindungsanordnung (10) zwischen einem als rohrartiges Hohlprofil ausgebildeten Faserkunststoffverbund-Profilteil (21) und einem Karosserierahmenteil (31), umfassend ein mit dem Karosserierahmenteil (31) verbundenes metallisches Zwischenstück (40), wobei das Zwischenstück (40) einen Verbindungsabschnitt (41) aufweist, der mit einem Ende des Faserkunststoffverbund-Profilteils (21) steckverbunden und verklebt ist, wobei das Ende des Faserkunststoffverbund-Profilteils (21) auf den Verbindungsabschnitt (41) des Zwischenstücks (40) aufgesteckt und innenflächig mit dem Verbindungsabschnitt (41) verklebt und **dadurch gekennzeichnet, dass** es mit wenigstens einer fließlochformenden Schraube (60) am Verbindungsabschnitt (41) des metallischen Zwischenstücks (40) festgeschraubt ist,
wobei der Außenquerschnitt des Verbindungsabschnitts (41) nicht vollumfänglich mit dem Innenquerschnitt des als rohrartiges Hohlprofil ausgebildeten Faserkunststoffverbund-Profilteils (21) korrespondiert, wodurch außerhalb der in einem Überlappungsbereich (U) flächenbündig aneinander anliegenden Flächenabschnitte Freilaufzonen (70) vorhanden sind, die unterschiedliche Wärmeausdehnungen ermöglichen.

2. Verbindungsanordnung (10) nach Anspruch 1,
**dadurch gekennzeichnet, dass**
der Verbindungsabschnitt (41) des Zwischenstücks (40) wenigstens eine Einsteckschräge (42) aufweist.

3. Verfahren zur Herstellung einer Verbindungsanordnung (10) gemäß einem der vorausgehenden Ansprüche, mit den Schritten:
- Auftragen eines Klebstoffs (50) auf die betreffenden Flächenabschnitte an der Außenumfangsfläche des Verbindungsabschnitts (41) und/oder an der Innenumfangsfläche am Ende des als rohrartiges Hohlprofil ausgebildeten Faserkunststoffverbund-Profilteils (21);
- Steckverbinden des Zwischenstücks (40) mit dem Faserkunststoffverbund-Profilteil (21);
- Ausführen einer Wärmebehandlung zum Aushärten des Klebstoffs (50), wobei die in einem Überlappungsbereich (U) flächenbündig aneinander anliegenden und mit Klebstoff (50) versehenen Flächenabschnitte aufgrund einer größeren Wärmeausdehnung des Zwischenstücks (40) aneinander gepresst werden;
wobei das Faserkunststoffverbund-Profilteil (21) vor der Wärmebehandlung mit wenigstens einer fließlochformenden Schraube (60) ohne Vorlochen des Zwischenstücks (40) am Zwischenstück (40) festgeschraubt wird und der Außenquerschnitt des Verbindungsabschnitts (41) nicht vollumfänglich mit dem Innenquerschnitt des als rohrartiges Hohlprofil ausgebildeten Faserkunststoffverbund-Profilteils (21) korrespondiert, wodurch außerhalb der in einem Überlappungsbereich (U) flächenbündig aneinander anliegenden Flächenabschnitte Freilaufzonen (70) vorhanden sind, die unterschiedliche Wärmeausdehnungen ermöglichen.

4. Verfahren nach Anspruch 3, wobei die Wärmebehandlung und das Aushärten des Klebstoffs (50) bei einem Trocknungsdurchlauf im Anschluss an ein kathodisches Tauchlackieren erfolgen.

5. Verfahren nach Anspruch 3 oder 4, wobei das Festschrauben auch ohne Vorlochen des Faserkunststoffverbund-Profilteils (21) erfolgt.

6. Verwendung einer mit einem Verfahren gemäß einem der Ansprüche 3 bis 5 hergestellten und/oder nach einem der Ansprüche 1 oder 2 ausgebildeten Verbindungsanordnung (10) an einer Kraftfahrzeugkarosserie zur Anbindung eines aus einem Faserkunststoffverbund-Profilteil (21), das als rohrartiges Hohlprofil ausgebildet ist, gebildeten Dachspriegels (20) an einen Dachrahmen (30).

7. Verwendung gemäß Anspruch 6, wobei das Zwischenstück (40) der Verbindungsanordnung (10) einstückig mit einem den Dachrahmen (30) bildenden Karosserierahmenteil (31) ausgebildet ist.

## Claims

1. A connection arrangement (10) between a fibre/plastics material composite profile part (21) formed as a tubular hollow profile and a vehicle body frame part (31), comprising a metallic intermediate piece (40) which is connected to the vehicle body frame part (31), wherein the intermediate piece (40) has a connecting portion (41) which is plug-connected and glued to one end of the fibre/plastics material composite profile part (21),
wherein
the end of the fibre/plastics material composite profile part (21) is placed on the connecting portion (41) of the intermediate piece (40) and glued on the inner face to the connecting portion (41), and **characterised in that** it is screwed tightly to the connecting portion (41) of the metallic intermediate piece (40) with at least one flow drill screw (60),
wherein the external cross-section of the connecting portion (41) does not correspond completely with the internal cross-section of the fibre/plastics material composite profile part (21) which is formed as a tubular hollow profile, as a result of which free-running zones (70) which make different thermal expansions possible are present outside the face portions which lie flush against each other in a region of overlap (U).

2. A connection arrangement (10) according to Claim 1,
**characterised in that**
the connecting portion (41) of the intermediate piece (40) has at least one insertion slope (42).

3. A method for producing a connection arrangement (10) according to one of the preceding claims, having the steps:
- applying an adhesive (50) to the relevant face portions on the outer peripheral face of the connecting portion (41) and/or to the inner peripheral face at the end of the fibre/plastics material composite profile part (21) which is designed as a tubular hollow profile;
- plug-connecting the intermediate piece (40) to the fibre/plastics material composite profile part (21);
- carrying out a heat treatment for curing the adhesive (50), wherein the face portions which lie flush against each other in a region of overlap (U) and are provided with adhesive (50) are pressed against each other due to a greater thermal expansion of the intermediate piece (40);
wherein the fibre/plastics material composite profile part (21) prior to the heat treatment is screwed tightly to the intermediate piece (40) with at least one flow drill screw (60) without pre-punching of the intermediate piece (40) and the external cross-section of the connecting portion (41) does not correspond completely with the internal cross-section of the fibre/plastics material composite profile part (21) which is formed as a tubular hollow profile, as a result of which free-running zones (70) which make different thermal expansions possible are present outside the face portions which lie flush against each other in a region of overlap (U).

4. A method according to Claim 3, wherein the heat treatment and the curing of the adhesive (50) take place in a drying cycle following cathodic dip coating.

5. A method according to Claim 3 or 4, wherein the screwing-tight takes place also without pre-punching of the fibre/plastics material composite profile part (21).

6. Use of a connection arrangement (10) produced with a method according to one of Claims 3 to 5 and/or formed according to one of Claims 1 or 2 on a motor-vehicle body for attaching a roof bow (20), formed from a fibre/plastics material composite profile part (21) which is designed as a tubular hollow profile, to a roof frame (30).

7. Use according to Claim 6, wherein the intermediate piece (40) of the connection arrangement (10) is designed in one piece with a vehicle body frame part (31) forming the roof frame (30).

## Revendications

1. Dispositif de liaison (10) d'une pièce profilée composite (21) en un matériau synthétique renforcé par des fibres réalisée sous la forme d'un profilé creux tubulaire et d'une pièce de cadre de carrosserie (31) comprenant un élément intermédiaire métallique (40) liée à la pièce de cadre de carrosserie (31), l'élément intermédiaire (40) comprenant un segment de liaison (41) qui est enfiché et collé à une extrémité de la pièce profilée composite (21) en matériau synthétique renforcé par des fibres, dans lequel,
l'extrémité de la pièce profilée renforcée par des fibres (21) est enfichée sur le segment de liaison (41) de l'élément intermédiaire (40) et collée sur sa surface interne au le segment de liaison (41),
**caractérisé en ce qu'**
avec cette extrémité est serrée par vissage au moins une vis de formation de perçages par fluage (60) sur le segment de liaison (41) de l'élément intermédiaire métallique (40),
la section externe du segment de liaison (41) ne correspondant pas sur la totalité de sa périphérie à la section interne de la pièce profilée composite (21) renforcée par des fibres réalisée sous la forme d'un profilé creux tubulaire de sorte qu'il y ait, à l'extérieur des segments de surface s'appliquant étroitement les uns contre les autres par leurs surfaces dans une zone de chevauchement (U), des zones libres (70) permettant des dilatations thermiques différentes.

2. Dispositif de liaison conforme à la revendication 1,
**caractérisé en ce que**
le segment de liaison (41) de l'élément intermédiaire (40) comporte au moins un biseau d'enfichage (42).

3. Procédé d'obtention d'un dispositif de liaison (10) conforme à l'une des revendications précédentes,
comprenant des étapes consistant à :
- appliquer une colle (50) sur les segments de surface concernés, de la surface périphérique externe du segment de liaison (41) et/ou sur la surface périphérique interne située à l'extrémité de la pièce profilée composite (21) en matériau synthétique renforcé par des fibres réalisée sous la forme d'un profilé creux tubulaire,
- liés par enfichage l'élément intermédiaire (40) avec la pièce profilée composite (21) en matériau synthétique renforcé par des fibres,
- effectuer un traitement thermique pour durcir la colle (50), les segments de surface s'appliquant étroitement les uns contre les autres leurs surfaces dans une zone de chevauchement (U) et équipés de colle (50) étant comprimés les unes contre les autres en raison d'une plus grande dilatation thermique de l'élément intermédiaire (40),
avant le traitement thermique la pièce profilée composite (21) en matériau synthétique renforcé par des fibres étant serrée par vissage sur l'élément intermédiaire (40), avec au moins une visse de formation de perçages par fluage (60), sans perçage préalable de cet élément intermédiaire (40), et la section externe du segment de liaison (41) ne correspondant pas sur la totalité de sa périphérie à la section interne de la pièce profilée composite (21) en un matériau synthétique renforcé par des fibres réalisée sous la forme d'un profilé creux tubulaire, de sorte qu'il y ait, à l'extérieur des segments de surface s'appliquant étroitement les uns contre les autres par leurs surfaces dans une zone de chevauchement (U), des zones libres (70) permettant des dilatations thermiques différentes.

4. Procédé conforme à la revendication 3,
selon lequel le traitement thermique et le durcissement de la colle (50) sont effectués lors d'un passage de séchage faisant suite à un vernissage par immersion cathodique.

5. Procédé conforme à la revendication 3 ou 4,
selon lequel le serrage par vissage est également effectué sans perçage préalable de la pièce profilée composite (21) en matériau synthétique renforcé par des fibres.

6. Utilisation d'un dispositif de liaison (10) obtenu par la mise en oeuvre d'un procédé conforme à l'une des revendications 3 à 5, ou conforme à l'une des revendications 1 et 2,
sur une carrosserie de véhicule pour permettre la liaison d'un arceau de toit (20) formé à partir d'une pièce profilée composite (21) en un matériau synthétique renforcé par des fibres réalisée sous la forme d'un profilé creux tubulaire, avec un cadre de toit (30).

7. Utilisation conforme à la revendication 6,
dans laquelle l'élément intermédiaire (40) du dispositif de liaison (10) est réalisé en une seule pièce avec une pièce de cadre de carrosserie (31) formant le cadre de toit (30).
